# EUROPEAN PATENT SPECIFICATION

(11) **EP 2 006 121 B1**
(45) Date of publication and mention of the grant of the patent: **27.01.2010**
(21) Application number: 08010617.2
(22) Date of filing: 11.06.2008
(51) Int. Cl.: B60C 1/00, C08J 3/22, C08K 3/36, C08K 5/01, C08L 7/00, C08L 15/00

(54) **Rubber composition for side wall, as well as pneumatic tire**
Gummizusammensetzung für Seitenwand sowie Luftreifen
Composition de caoutchouc pour flasque de roue, ainsi qu'un pneu

(30) Priority: 21.06.2007 JP 2007164023
(43) Date of publication of application: 24.12.2008
(73) Proprietor: Sumitomo Rubber Industries, Ltd., Kobe-shi Hyogo-ken (JP)
(72) Inventor: Uesaka, Kenichi, Kobe-shi Hyogo 651-0072 (JP); Imoto, Yoji, Kobe-shi Hyogo 651-0072 (JP)
(74) Representative: Manitz, Finsterwald & Partner GbR

(56) References cited:
- EP-A- 1 086 977
- EP-A- 1 690 894
- EP-A- 1 757 656
- EP-A- 1 798 257
- GB-A- 2 041 945
- JP-A- 2007 197 676
- US-A- 4 218 349

## Description

This nonprovisional application is based on Japanese Patent Application No. 2007-164023 filed with the Japan Patent Office on June 21, 2007, the entire contents of which are hereby incorporated by reference.

### BACKGROUND OF THE INVENTION

### Field of the Invention

The present invention relates to a rubber composition for a side wall, as well as a pneumatic tire provided with a side wall using the composition.

### Description of the Background Art

Previously, in a composition for a side wall of a tire, from a viewpoint of improving crack growing property, polybutadiene rubber has been blended into a natural rubber. However, a highly unsaturated rubber such as polybutadiene rubber has a nature that its double bond part reacts with ozone to depolymerize and, in a tire provided with a side wall rubber using this, the nature becomes a cause for generation of a crack on a surface of the side wall rubber by standing or running. For suppressing this, a method of increasing an amount of a crack resistance improving agent such as an age resister is known, but in this case, since blooming is caused, and a tire surface turns into reddish brown, there is a problem that beauty of a tire is deteriorated.

On the other hand, it is known that an ethylene-propylene-diene rubber (EPDM), and a brominated styrene isobutylene copolymer (BIMS) can improve durability, and crack resistance. However, when these rubbers are used, there arises a problem in crack resistance growing property.

Recently, with increased interest in environmental problems, a method for reducing a use amount of a raw material derived from a petroleum source has been studied in a variety of technical fields. A half or more of a total weight of a tire being generally sold now is constituted of a raw material being a petroleum source. For example, since a tire for a general passenger automobile contains such as about 20% by mass of a synthetic rubber, about 20% by mass of carbon black, a softening agent and a synthetic fiber, about 50% by mass or more of a whole tire is constituted of a raw material of the petroleum source. Then, development of a rubber for a tire using a raw material derived from a natural source satisfying the required properties equivalent to or exceeding those when a raw material derived from a petroleum source is used, is desired.

In general, from a viewpoint of weather resistance and reinforcing property, carbon black derived from a petroleum source has previously been compounded into a composition for a side wall of a tire, but when depletion of a petroleum in future is assumed, it becomes necessary to use a white filler such as silica and calcium carbonate.

In addition, previously, a technique has been known in which processibility is enhanced, and a hardness after vulcanization is enhanced by compounding an isoprene-based rubber modified with oxidation which is obtained by irradiating at least one kind selected from a natural rubber and a synthetic rubber, and an isoprene-based rubber in the state where it is dissolved in a solvent with such as ultraviolet-ray, electron beam or visible light, and which has an average molecular weight of 3000 to 50000. In addition, there is known a technique of improving workability at kneading, and enhancing a mechanical strength after vulcanization by mixing a liquid polymer such as a liquid natural rubber and liquid polyisoprene having a viscosity average molecular weight of 20000 to 95000 into a natural rubber or a mixed rubber of a natural rubber and a synthetic rubber, and mixing a reinforcing agent to produce a vulcanizing rubber composition. Further, there is also known a technique of improving workability at kneading, and enhancing a mechanical strength after vulcanization, by a vulcanizing rubber composition obtained by compounding 55 parts by weight of carbon black, 0 to 30 parts by weight of a softening agent, and 2 to 4 parts by weight of a liquid polymer having a viscosity average molecular weight of 45000 to 95000 based on 100 parts by weight of a rubber. However, these techniques do not consider at all a side wall rubber and performance required for this, and processability is not sufficient.

In addition, a rubber composition for a tire tread using a thermal expansible fine particle whose surface is covered with a diene-based liquid polymer such as a liquid isoprene rubber is also known, but this technique also does not consider at all a side wall rubber and performance required for this, and processibility is not sufficient. Moreover, a rubber composition for a tire obtained by compounding carbon black, and a liquid polymer such as liquid polyisoprene having the number average molecular weight of 2000 to 50000 into a rubber component including a natural rubber and/or a polyisoprene rubber is also known, but this technique also does not consider at all a side wall rubber and performance required for this, and processibility is not sufficient.

In addition, Japanese Patent Laying-Open No. 07-118445 (Patent Document 1) discloses a rubber composition for a tire tread in which liquid polyisoprene having a carboxyl group and/or liquid polybutadiene having a carboxyl group account for 3 to 40 % by weight of the rubber component, and a specified amount of a silane coupling agent is compounded. According to the invention disclosed in Patent Document 1, a rubber composition for a tire tread being improved gripping property on a frozen road surface is provided. However, the invention disclosed in this Patent Document 1 also dos not consider at all a side wall rubber and performance required for this, and processibility is not sufficient.

EP 1 757 656 A1 discloses a rubber composition for a sidewall comprising 20 to 60 parts by weight of silica and 4 to 16 parts by weight of a silane compound based on 100 parts by weight of a rubber component comprising 40 to 80 % by weight of a natural rubber and 60 to 20 % by weight of at least one rubber.

EP 1 086 977 A2 relates to a partially sulphur pre-vulcanized, pre-shaped rubber composition containing, based on 100 parts by weight of elastomer, at least one solid diene-based elastomer, 3 to 15 phr of a liquid conjugated diene polymer and 45 to 65 phr of a reinforcing filler.

### SUMMARY OF THE INTENTION

The present invention was done in order to solve the aforementioned problems, and an object of the present invention is to provide a rubber composition for a side wall in which properties desired in a rubber composition of a side wall such as heat resistance, flexing resistance, and fatigue resistance are improved while a use amount of a raw material derived from a petroleum source is reduced, as well as a pneumatic tire provided with a side wall rubber using the rubber composition.

The rubber composition for a side wall of the present invention includes a solid rubber component including a natural rubber component consisting of 30 to 70% by mass of a natural rubber and 30 to 70% by mass of a modified natural rubber, 20 to 60 parts by mass of silica, 3 to 60 parts by mass of a liquid rubber having a molecular weight of 100,000 g/mol or less and 0.2 to 5 parts by mass of a tiazole-based vulcanization accelerator based on 100 parts by mass of the solid rubber component.

It is preferable that the modified natural rubber used in the rubber composition for a side wall of the present invention is an epoxidized natural rubber.

It is preferable that the liquid rubber used in the rubber composition for a side wall of the present invention is a liquid polyisoprene rubber.

In addition, it is preferable that the rubber composition for a side wall of the present invention further contains 0.2 to 5 parts by mass of a sulfenamide-based vulcanization accelerator based on 100 parts by mass of the solid rubber component.

The present invention further provides a pneumatic tire provided with a side wall using the aforementioned rubber composition of the present invention.

According to the present invention, a rubber composition for a side wall in which properties desired in a rubber composition for a side wall such as heat resistance, flexing resistance, and fatigue resistance are improved while a use amount of a raw material derived from a petroleum source is reduced , as well as a pneumatic tire provided with a side wall rubber using the rubber composition can be provided.

The foregoing and other objects, features, aspects and advantages of the present invention will become more apparent from the following detailed description of the present invention when taken in conjunction with the accompanying drawings.

### BRIEF DESCRIPTION OF THE DRAWINGS

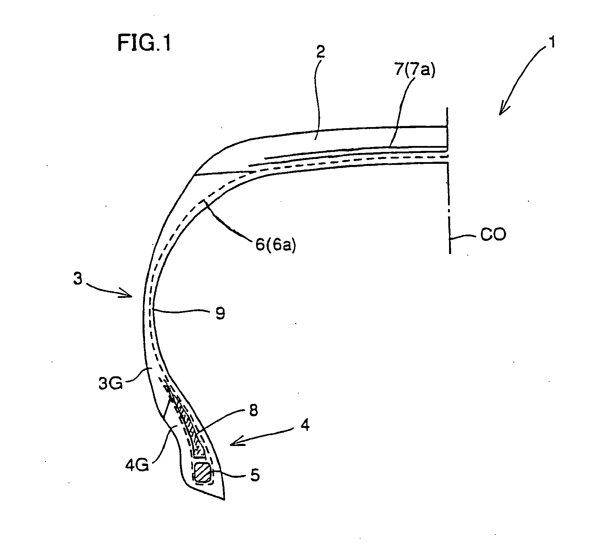

Fig. 1 is a schematic cross-sectional view showing one example of the pneumatic tire of the present invention.

### DESCRIPTION OF THE PREFERRED EMBODIMENTS

The rubber composition for a side wall of the present invention contains a solid rubber component, and 20 to 60 parts by mass of silica, 3 to 60 parts by mass of a liquid rubber and 0.2 to 5 parts by mass of a tiazole-based vulcanization accelerator based on 100 parts by mass of the solid rubber component. The solid rubber component used in the present invention contains a natural rubber component consisting of 30 to 70% by mass of the natural rubber (NR) and 30 to 70% by mass of a modified natural rubber (hereinafter, simply also referred to as "natural rubber component").

### <Solid rubber component>

In the rubber composition for a side wall of the present invention, the solid rubber component contains a natural rubber component consisting of a natural rubber and a modified natural rubber. It is preferable that the solid rubber component in the present invention contains the natural rubber component in a range of 70 to 100% by mass. In the present invention, the "solid rubber" is defined as a rubber having a molecular weight of 100000 or more.

As the natural rubber used in the present invention, any natural rubber is included as far as it is known as a natural rubber, and a place of origin and the like are not limited. Such the natural rubber contains mainly cis 1,4 polyisoprene, and may contain trans 1,4 polyisoprene depending on the required property. Therefore, the natural rubber includes, in addition to a natural rubber containing mainly cis 1,4 polyisoprene, a natural rubber containing mainly trans 1,4 isoprene such as balata being one kind of Sapotaceae rubber plants produced in South America. The natural rubber component in the present invention can contain one kind or two or more kinds of such the natural rubbers (i.e. one component or two or more components). As such the natural rubber, for example, a natural rubber of a grade such as RSS#3, and TSR can be suitably used.

The modified natural rubber used in the present invention refers to a rubber in which the aforementioned rubber is modified or purified, and examples include such as an epoxidized natural rubber (ENR), a deproteinized natural rubber (DPNR), and a hydrogenated natural rubber. The natural rubber component in the present invention can contain one kind or two or more kinds of such the modified natural rubber. Among them, from a viewpoint of improving ozone resistance, it is preferable that the natural rubber component in the present invention contains an epoxidized natural rubber as the modified natural rubber.

The epoxidized natural rubber is one kind of modified natural rubbers in which an unsaturated double bond of the natural rubber is epoxidized, and a molecular cohesive force is enhanced by an epoxy group which is a polar group. For this reason, a glass transition temperature (Tg) is higher than that of the natural rubber, and a mechanical strength, abrasion resistance, and air permeability resistance are excellent. As such the epoxidized natural rubber, a commercially available epoxidized natural rubber such as ENR25 (manufactured by Kumpulan Guthrie Berhad) (epoxidization rate: 25%), and ENR50 (manufactured by Kumpulan Guthrie Berhad) (epoxidization rate: 50%) may be used, and an epoxidized natural rubber may be used. A method of epoxidizing a natural rubber is not particularly limited, and includes such as a chlorohydrin method, a direct oxidation method, a hydrogen peroxide method, an alkylhydroperoxide method, and a peracid method. Examples of the peracid method include a method of reacting organic peracid such as peracetic acid and performic acid as an epoxidizing agent with an emulsion of the natural rubber.

The epoxidization rate of the epoxidized natural rubber (ENR) is preferably 20 mol% or more, more preferably 25 mol% or more. Here, the epoxidization rate means a ratio of the number of epoxidized double bonds among the total number of the double bonds in the natural rubber before epoxidization ((number of epoxidized double bonds)/(number of double bonds before epoxidization)), and is obtained by, for example, titration analysis, or nuclear magnetic resonance (NMR) analysis. When the epoxidization rate of the epoxidized natural rubber (ENR) is less than 20 mol%, since a glass transition temperature of the epoxidized natural rubber (ENR) is low, there is a tendency that it is difficult to obtain the desired properties such as ozone resistance in a pneumatic tire provided with a side wall rubber using the rubber composition for a side wall. In addition, the epoxidiation rate of the epoxidized natural rubber (ENR) is preferably 65 mol% or less, more preferably 50 mol% or less. When the epoxidization rate of the epoxidized natural rubber (ENR) exceeds 65 mol%, there is a tendency that a hardness is excessively increased and, in the pneumatic tire provided with a side wall rubber using the rubber composition for a side wall, riding comfort is deteriorated.

More typically, examples of the epoxidized natural rubber (ENR) include an epoxidized natural rubber having the epoxidization rate of 25 mol%, and an epoxidized natural rubber having the epoxidization rate of 50 mol%.

Alternatively, the solid rubber component may contain a rubber derived from a petroleum source in such a range that the effect of the present invention is not deteriorated. Examples of the rubber derived from a petroleum source include such as a styrene butadiene rubber (SBR), a butadiene rubber (BR), a styrene isoprene copolymer rubber, an isoprene rubber (IR), a butyl rubber (IIR), a chloroprene rubber (CR), an acrylonitrile butadiene rubber (NBR), a halogenated butyl rubber (X-IIR), and a halide of a copolymer of isoprene and p-methylstyrene. Among them, SBR and BR are preferable since desired properties such as flexing resistance can be imparted in a pneumatic tire provided with a side wall rubber using the rubber composition for a side wall.

The natural rubber component in the present invention is constituted of 30 to 70% by mass of the aforementioned natural rubber, and 30 to 70% by mass of the modified natural rubber (particularly, epoxidized natural rubber). In the natural rubber component, when the natural rubber is less than 30% by mass, and the modified natural rubber exceeds 70% by mass, the resulting side wall rubber becomes hard, and riding comfort is deteriorated. On the other hand, when the natural rubber exceeds 70% by mass and the modified natural rubber is less than 30% by mass, ozone resistance is deteriorated.

### <Silica>

The rubber composition for a side wall of the present invention contains silica in addition to the aforementioned solid rubber component. Silica functions as a reinforcing filler and, by compounding silica, a tensile strength of the resulting side wall rubber can be improved. In addition, since silica is derived from a source other than a petroleum, a use amount of a raw material derived from a petroleum source in the rubber composition can be reduced as compared with, for example, the case where a reinforcing agent derived from a petroleum source such as carbon black is compounded as a main reinforcing agent.

The rubber composition for a side wall of the present invention contains 20 to 60 parts by mass of silica based on 100 parts by mass of the solid rubber component. When the content of silica is less than 20 parts by mass based on 100 parts by mass of the solid rubber component, flexing resistance is deteriorated and, on the other hand, when the content of silica exceeds 60 parts by mass based on 100 parts by mass of the solid rubber component, the rubber is too hard, and riding comfort is deteriorated.

In the rubber composition for a side wall of the present invention, it is preferable to use silica having a BET specific surface area of 50m²/g or more, and it is more preferable to use silica having a BET specific surface area of 100m²/g or more. When silica having a BET specific surface area of less than 50m²/g is used, there is a tendency that a side wall rubber having a sufficient hardness is not obtained. In addition, a BET specific surface area of silica is preferably 200m²/g or less, more preferably 190m²/g or less. When silica having a BET specific surface area exceeding 200m²/g is used, there is a tendency that processibility of the rubber is deteriorated. The aforementioned BET specific surface area of silica can be measured by, for example, the method according to ASTM-D-4820-93.

Silica may be silica prepared by a wet method, or silica prepared by a dry method. In addition, examples of a preferable commercially available product include such as Ultrasil VN2 (manufactured by Evonik Degussa Japan. Co., Ltd.) (BET specific surface area: 125m²/g), and Ultrasil VN3 (manufactured by Evonik Degussa Japan. Co., Ltd.) (BET specific surface area:175m²/g).

### <Liquid rubber>

The rubber composition for a side wall of the present invention further contains a liquid rubber. In the present invention, the "liquid rubber" is defined as a rubber having a molecular weight of 100000 g/mol or less. Examples of such the liquid rubber include such as a liquid natural rubber, a liquid polyisoprene rubber, a liquid polybutadiene rubber, a liquid styrene butadiene rubber, a liquid nitrile rubber, and a liquid chloroprene rubber. The rubber composition for a side wall of the present invention can use one kind or two or more kinds of liquid rubbers selected from the aforementioned liquid rubbers. Among them, a liquid polyisoprene rubber is preferable based on the reason that compatibility with the natural rubber is good.

In addition, in the rubber composition for a side wall of the present invention, a liquid rubber, a double bond of which is hydrogenated, is preferably used. Among them, a hydrogenated liquid polyisoprene rubber can be particularly preferably used. When the hydrogenated liquid polyisoprene rubber is used in the rubber composition for a side wall of the present invention, there is an advantage that ozone resistance of a side wall rubber using the rubber composition is improved. It is assume that this is due to use of a liquid rubber, the number of double bonds of which has been reduced by a hydrogenation reaction.

Alternatively, a liquid rubber having a functional group at a side chain and/or an end of a molecular chain may be used. Examples of such the functional group include such as a hydroxy group, an amino group, a carboxyl group, a halogen atom, an epoxy group, and an isocyanate group. Alternatively, a liquid rubber in a form of being modified with maleic acid may be used.

The liquid rubber used in the present invention has preferably a number average molecular weight in a range of 10000 to 70000, more preferably in a range of 20000 to 50000. When the number average molecular weight of the liquid rubber is less then 10000, there is a tendency that bleeding is easily caused and, on the other hand, when the number average molecular weight of the liquid rubber exceeds 70000, there is a tendency that it becomes difficult to obtain a suitable liquid islands structure.

As a suitable liquid rubber in the rubber composition for a side wall of the present invention, specifically, a commercially available product such as LIR-30 (manufactured by KURARAY CO., LTD., number average molecular weight:2900), LIR-50 (manufactured by KURARAY CO., LTD., number average molecular weight:47000), LIR-200 (manufactured by KURARAY CO., LTD., number average molecular weight:25000), and LIR-290 (manufactured by KURARAY CO., LTD., number average molecular weight:25000) is exemplified.

The rubber composition for a side wall of the present invention contains the aforementioned liquid rubber in a range of 3 to 60 parts by mass based on 100 parts by mass of the solid rubber component. In addition, when two or more kinds of liquid rubbers are used, this content refers to a total amount of the liquid rubbers.

### <Vulcanization accelerator>

According to the present invention, the rubber composition for a side wall further contains a thiazole-based vulcanization accelerator. In addition to this a vulcanization accelerator containing at least one of sulfenamide-based, thiuram-based, thiourea-based, guanidine-based, dithiocarbamic acid-based, aldehyde amine-based or aldehyde ammonia-based, imidazoline-based, and xanthate-based vulcanization accelerators can be used. As the thiazole-based vulcanization accelerator, thiazole-based compounds such as MBT (2-mercaptobenzothiazole), MBTS (dibenzothiazyl disulfide), a sodium salt, a zinc salt or a copper salt of 2-mercaptobenzothiazole, a cyclohexylamine salt, 2-(2,4-dinitrophenyl)mercaptobenzothiazole, and 2-(2,6-diethyl-4-morpholinothio)benzothiazole can be used. As the sulfenamide-based vulcanization accelerators, sulfenamide-based compounds such as CBS (N-cyclohexyl-2-benzothiazylsulfenamide), TBBS (N-tert-butyl-2-benzothiazylsulfenamide), N, N-dicyclohexyl-2-benzothiazylsulfenamide, N-oxydiethylene-2-benzothiazylsulfenamide, and N, N-diisopropyl-2-benzothiazolesulfenamide can be used. As the thiuram-based vulcanization accelerator, thiuram-based compounds such as TMTD (tetramethylthiuram disulfide), tetraethylthiuram disulfide, tetramethylthiuram monosulfide, dipentamethylenethiuram disulfide, dipentamethylenethiuram monosulfide, dipentamethylenethiuram tetrasulfide, dipentamethylenethiuram hexasulfide, tetrabutylthiuram disulfide, and pentamethylenethiuram tetrasulfide can be used. As the thiourea-based vulcanization accelerator, thiourea compounds such as thiacarbamide, diethylthiourea, dibutylthiourea, trimethylthiourea, and diorthotolylthiourea can be used. As the guanidine-based vulcanization accelerator, guanidine-based compounds such as diphenylguanidine, diorthotolylguanidine, triphenylguanidine, orthotolylbiguanide, and diphenylguanidine phthalate can be used. As the dithiocarbamic acid-based vulcanization accelerator, dithiocarbamic acid-based compounds such as zinc ethylphenyldithiocarbamate, zinc butylphenyldithiocarbamate, sodium dimethyldithiocarbamate, zinc dimethyldithiocarbamate, zinc diethyldithiocarbamate, zinc dibutyldithiocarbamate, zinc diamyldithiocarbamate, zinc dipropyldithiocarbamate, a complex salt of zinc pentamethylenedithiocarbamate and piperidine, zinc hexadecyl (or octadecyl)isopropyldithiocarbamate, zinc dibenzyldithiocarbamate, sodium diethyldithiocarbamate, pentamethylenedithiocarbamic acid piperidine, selenium dimethyldithiocarbamate, tellurium diethyldithiocarbamate, and cadmium diamyldithiocarbamate can be used. As the aldehyde-amine-based or aldehyde-ammonia-based vulcanization accelerator, aldehyde-amine-based or aldehyde-ammonia-based compounds such as an acetoaldehyde-aniline reaction product, a butylaldehyde-aniline condensate, hexamethylenetetramine, and an acetoaldehyde-ammonia reaction product can be used. As the imidazoline-based vulcanization accelerator, imidazoline-based compounds such as 2-mercaptoimidazoline can be used. As the xanthate-based vulcanization accelerator, xanthate-based compound such as zinc dibutylxanthogenate can be used.

These vulcanization accelerators may used alone, or may be used by combined two or more kinds.

According to the present invention, the rubber composition contains a thiazole-based vulcanization accelerator and optionally a sulfenamide-based vulcanization accelerator. This is because by using a thiazole-based vulcanization accelerator and optionally a sulfenamide-based vulcanization accelerator, heat resistance, flexing resistance and ozone resistance can be further improved in the pneumatic tire provided with a side wall rubber using the rubber composition. As such the thiazole-based vulcanization accelerator and sulfenamide-based vulcanization accelerator, a commercially available product can be used suitably. Specifically, examples of the thiazole-based vulcanization accelerator include such as Nocceler DM-P (DM) (manufactured by OUCHI SHINKO CHEMICAL INDUSTRIAL CO., LTD.), Nocceler M (manufactured by OUCHI SHINKO CHEMICAL INDUSTRIAL CO., LTD.), and Nocceler MZ (manufactured by OUCHI SHINKO CHEMICAL INDUSTRIAL CO., LTD), and examples of the sulfenamide-based vulcanization accelerator include such as Nocceler CZ-G (CZ)(manufactured by OUCHI SHINKO CHEMICAL INDUSTRIAL CO., LTD.), Nocceler NS (manufactured by OUCHI SHINKO CHEMICAL INDUSTRIAL CO., LTD.), and Nocceler DZ (manufactured by OUCHI SHINKO CHEMICAL INDUSTRIAL CO., LTD.).

The content of the thiazole-based vulcanization accelerator is in a range of 0.2 to 5 parts by mass, more preferably in a range of 1 to 2.5 parts by mass based on 100 parts by mass of the aforementioned solid rubber component. When the content of the thiazole-based vulcanization accelerator is less than 0.1 part by mass based on 100 parts by mass of the solid rubber component, there is a tendency that vulcanization is slow and, on the other hand, when the content of the thiazole-based vulcanization accelerator exceeds 3 parts by mass based on 100 parts by mass of the solid rubber component, there is a tendency that blooming is caused.

In addition, when the sulfenamide-based vulcanization accelerator is used, the content thereof is not particularly limited, but is preferably in a range of 0.1 to 3 parts by mass, more preferably in a range of 1 to 2.5 parts by mass based on 100 parts by mass of the aforementioned solid rubber component. When the content of the thiazole-based vulcanization accelerator is less than 0.1 part by mass based on 100 parts by mass of the solid rubber component, there is a tendency that vulcanization is slow and, on the other hand, when the content of the sulfenamide-based vulcanization accelerator is exceeds 3 parts by mass based on 100 parts by mass of the solid rubber component, there is a tendency that blooming is caused.

### <Silane coupling agent>

The rubber composition for a side wall of the present invention contains silica as described above, and it is preferable that a silane coupling agent together with this silica is compounded. As the silane coupling agent, the previously known silane coupling agent can be used, and examples include sulfide-based silane coupling agents such as bis(3-triethoxysilylpropyl) tetrasulfide, bis(2-triethoxysilylethyl) tetrasulfide, bis(4-triethoxysilylbutyl) tetrasulfide, bis(3-trimethoxysilylpropyl) tetrasulfide, bis(2-trimethoxysilylethyl) tetrasulfide, bis(4-trimethoxysilylbutyl) tetrasulfide, bis(3-triethoxysilylpropyl) trisulfide, bis(2-triethoxysilylethyl) trisulfide, bis(4-triethoxysilylbutyl) trisulfide, bis(3-trimethoxysilylpropyl) trisulfide, bis(2-trimethoxysilylethyl) trisulfide, bis(4-trimethoxysilylbutyl) trisulfide, bis(3-triethoxysilylpropyl) disulfide, bis(2-triethoxysilylethyl) disulfide, bis(4-triethoxysilylbutyl) disulfide, bis(3-trimethoxysilylpropyl) disulfide, bis(2-trimethoxysilylethyl) disulfide, bis(4-trimethoxysilylbutyl) disulfide, 3-trimethoxysilylpropyl-N, N-dimethylthiocarbamoyl tetrasulfide, 3-triethoxysilylpropyl-N, N-dimethylthiocarbamoyl tetrasulfide, 2-triethoxysilylethyl-N, N-dimethylthiocarbamoyl tetrasulfide, 2-trimethoxysilylethyl-N,N-dimethylthiocarbamoyl tetrasulfide, 3-trimethoxysilylpropylbenzothiazolyl tetrasulfide, 3-triethoxysilylpropylbenzothiazole tetrasulfide, 3-trimethoxysilylpropyl methacrylate monosulfide, 3-trimethoxysilylpropyl methacrylate monosulfide; mercapto-based silane coupling agents such as 3-mercaptopropyltrimethoxysilane, 3-mercaptopropyltriethoxysilane, 2-mercaptoethyltrimethoxysilane, and 2-mercaptoethyltriethoxysilane; vinyl-based silane coupling agents such as vinyltriethoxysilane, and vinyltrimethoxysilane; amino-based silane coupling agents such as 3-aminopropyltriethoxysilane, 3-aminopropyltrimethoxysilane, 3-(2-aminoethyl)aminopropyltriethoxysilane, and 2-(2-aminoethyl)aminopropyltrimethoxysilane; glycidoxy-based silane coupling agents such as γ-glycidoxypropyltriethoxysilane, γ-glycidoxypropyltrimethoxysilane, γ-glycidoxypropylmethyldiethoxysilane, and γ-glycidoxypropylmethyldimethoxysilane; nitro-based silane coupling agents such as 3-nitropropyltrimethoxysilane, and 3-nitropropyltriethoxysilane; chloro-based silane coupling agents such as 3-chloropropyltrimethoxysilane, 3-chloropropyltriethoxysilane, 2-chloroethyltrimethoxysilane, and 2-chloroethyltriethoxysilane. These silane coupling agents may be used alone, or may be used by combining two or more kinds.

Among them, Si69 (manufactured by Evonik Degussa Japan. Co., Ltd.) (bis(3-triethoxysilylpropyl) tetrasulfide), and Si266 (manufactured by Evonik Degussa Japan. Co., Ltd.) (bis(3-triethoxysilylpropyl) disulfide) are preferably used based on the reason of better processibility.

When the silane coupling agent is further contained, the content thereof is not particularly limited, but is preferably 3 parts by mass or more, more preferably 4 parts by mass or more based on 100 parts by mass of silica. When the content of the silane coupling agent is less than 3 parts by mass based on 100 parts by mass of silica, there is a tendency that kneading and extrusion processibility of the rubber are reduced and, at the same time, there is a tendency that when the resulting side wall rubber is used, riding comfort is deteriorated. In addition, the content of the silane coupling agent is preferably 15 parts by mass or less, more preferably 10 parts by mass or less based on 100 parts by mass of silica. When the content of the silane coupling agent exceeds 15 parts by mass based on 100 parts by mass of silica, the effect of improving kneading and extrusion processibility of the rubber is small and, on the other hand, the cost is increased, being not economical, and there is a tendency that flexing resistance is inferior in the resulting side wall rubber.

### <Other compounding ingredient>

In the rubber composition for a side wall of the present invention, in addition to the aforementioned components, other compounding ingredient having been previously used in the rubber industry, for example, a vulcanizing agent, stearic acid, a vulcanization accelerator, a vulcanization accelerator auxiliary agent, an oil, a hardened resin, a wax, and an aging preventing agent may be compounded.

As the vulcanizing agent, organic peroxide or a sulfur-based vulcanizing agent can be used and, as the organic peroxide, for example, benzoyl peroxide, dicumyl peroxide, di-t-butyl peroxide, t-butylcumyl peroxide, methyl ethyl ketone peroxide, cumene hydroperoxide, 2,5-dimethyl-2,5-di(t-butylperoxy)hexane, 2,5-dimethyl-2,5-di(benzoylperoxy)hexane, 2,S-dimethyl-2,5-di(t-butylperoxy)hexyne-3 or 1,3-bis(t-butylperoxypropyl)benzene, di-t-butylperoxy-diisopropylbenzene, t-butylperoxybenzene, 2,4-dichlorobenzoyl peroxide, 1,1-di-t-butylperoxy-3,3,5-trimethylsiloxiane, and n-butyl-4,4-di-t-butylperoxyvalerate can be used. Among them, dicumyl peroxide, t-butylperoxybenzene and bi-t-butylperoxy-diisopropylbenzene are preferable. In addition, as the sulfur-based vulcanizing agent, for example, sulfur, and morpholine disulfide can be used. Among them, sulfur is preferable. These vulcanizing agents may be used alone, or may be used by combining two or more kinds.

As the vulcanization accelerator activator, for example, zinc oxide can be used.

As the age resister, amine-based agent, phenol-based agent, imidazole-based agent, and a carbamic acid metal salt can be used by appropriate selection.

The rubber composition for a side wall of the present invention may contain a stearic acid metal salt. Examples of the stearic acid metal salt include such as magnesium stearate, magnesium 12-hydroxystearate, calcium stearate, calcium 12-hydroxystearate, barium stearate, barium 12-hydroxystearate, zinc stearate, and zinc 12-hydroxystearate. Among the stearic acid metal salt, from a viewpoint of the effect of improving heat resistance, and compatibility with the epoxidized natural rubber, a stearic acid alkaline earth metal salt is preferable, and calcium stearate, calcium 12-hydroxystearate, barium stearate, and barium 12-hydroxystearate are more preferable.

A content of the stearic acid metal salt is 1 part by mass or more, preferably 1.5 parts by mass or more based on 100 parts by mass of the solid rubber component. When the content of the stearic acid metal is less than 1 part by mass based on 100 parts by mass of the solid rubber component, there is a tendency that processibility is deteriorated (unification of the rubber is deteriorated). In addition, the content of the stearic acid metal salt is 10 parts by mass or less, preferably 8 parts by mass or less based on 100 parts by mass of the solid rubber component. When the content of the stearic acid metal salt exceeds 10 parts by mass based on 100 parts by mass of the solid rubber component, there is a tendency that blooming is caused.

Examples of the oil include such as a process oil, a vegetable oil, and a mixture thereof. Examples of the process oil include such as a paraffin-based process oil, a naphthene-based process oil, and an aromatic-based process oil. Examples of the vegetable oil include such as a castor oil, a cotton seed oil, a linseed oil, a rapeseed oil, a soybean oil, a palm oil, a coconut oil, a peanut oil, a pine oil, a pine tar, a tall oil, a corn oil, a rice oil, a safflower oil, a sesame oil, an olive oil, a sunflower oil, a palm kernel oil, a camellia oil, a jojoba oil, a macadamia nut oil, a safflower oil, a paulownia oil, and rosin.

The rubber composition for a side wall of the present invention is not particularly limited in a method for producing thereof, but is preferably a composition produced by kneading a natural rubber and silica, and further adding a modified natural rubber to which a liquid rubber has been added in advance and mixed, followed by kneading. By such the production, as compared with production by other method, flexing resistance and a tearing strength of the resulting rubber composition for a side wall can be further improved Although a detailed mechanism of being improved in heat resistance, flexing resistance and a tearing strength is unknown, in the rubber composition for a side wall produced as described above, it is observed that a mixture of the modified natural rubber and the liquid rubber as an island phase is dispersed in a sea phase of the natural rubber and it was thought that this dispersion form contributes to improvement in heat resistance, flexing resistance and a tearing strength.

The present invention also provides a pneumatic tire provided with a side wall rubber using the aforementioned rubber composition for a side wall of the present invention Here, Fig. 1 is a schematic cross-sectional view showing one example of the pneumatic tire of the present invention. The pneumatic tire 1 includes a tread part 2, a pair of side wall parts 3 extending inwardly in a tire radial direction from both ends of tread part 2, and a bead part 4 situated at an inner end of each side wall part 3. In addition, a carcass part 6 is bridged between bead parts 4, 4 and, at the same time, a belt layer 7 having the hoop effect to reinforce tread part 2 is disposed on an outer side of this carcass 6 and in tread part 2.

Above mentioned carcass 6 is formed of one or more carcass plies 6a in which a carcass cord is arranging at an angle of, for example, 70 to 90° relative to a tire equator CO, and this carcass ply 6a is locked by turning up from an inner side to an outer side in a tire axial direction around a bead core 5 of bead part 4 via from the aforementioned tread part 2 to side wall part 3.

Above mentioned belt layer 7 is formed of two or more belt plies 7a in which a belt cord is arranged at an angle of, for example, 40° or less relative to a tire equator CO, and each belt cord is piled up in different directions so as to cross between plies. If necessary, a band layer (not shown) for preventing lifting of both ends of belt layer 7 may be provided at least outside belt layer 7 and, thereupon, the band layer is formed of a continuous ply in which an organic fiber cord having a low modulus is spirally wound approximately parallel with the tire equator CO.

In addition, in bead part 4, a bead apex rubber 8 extending outwardly in a radial direction from bead core 5 is disposed and, at the same time, on an inner side of carcass 6, an inner liner rubber 9 forming a tire inner cavity surface is provided adjacent, and an outer side of carcass 6 is protected with a clinch rubber 4G and a side wall rubber 3G. The rubber composition for a side wall of the present invention is used in the aforementioned side wall rubber 3G.

Fig. 1 exemplifies the pneumatic tire for a passenger automobile, but the present invention is not limited to this, and provides a pneumatic tire being used in application of various vehicles such as a passenger automobile, a truck, a bus, and a heavy vehicle.

The pneumatic tire of the present invention is produced by the previously known method using the rubber composition for a side wall of the present invention. That is, a rubber composition for a side wall preferably produced by the aforementioned method is extrusion-processed in conformity with a shape of a side wall rubber of a tire at a stage of unvulcanization, and molding the processed material together with other members of a tire on a tire molding machine by a conventional method, thereby, an unvulcanized tire is formed. By heating and pressing this unvulcanized tier in a vulcanization machine, the tire of the present invention can be obtained.

Such the pneumatic tire of the present invention is an "ecological tire" being friendly to the earth environment, in which a content of components derived from a petroleum source in the side wall rubber is more reduced, and source saving and environmental protection are sufficiently considered and, at the same time, physical properties are maintained.

The present invention will be explained in more detail by way of Examples and Comparative Examples, but the present invention is not limited to these Examples.

### (Examples 1 and 2, and Comparative Examples 1 and 2)

According to compounding formulation shown in Table 1, and using a 1.7L of Banbury mixer manufactured by KOBE STEEL, LTD., each compounding components were added and charged so that a charging rate became 58%, and the mixture was kneaded for 3 minutes at a rotation number of 80rpm until a temperature reached at 140°C. Then, from a master batch prepared in advance by adding a liquid rubber to an epoxidized natural rubber at a compounding amount shown in Table 1 and mixing, an epoxidized natural rubber obtained by adding this liquid rubber and mixing was added, and the mixture was kneaded. Further, after sulfur and a vulcanization accelerator were added at compounding amounts shown in Table 1 using an 8 inch roll, the mixture was kneaded at 80°C for 5 minutes using an open roll, and further vulcanized under the condition of 160°C and 20 minutes to obtain vulcanized rubber samples of compounding related to Examples 1 and 2, and Comparative Examples 1 and 2.

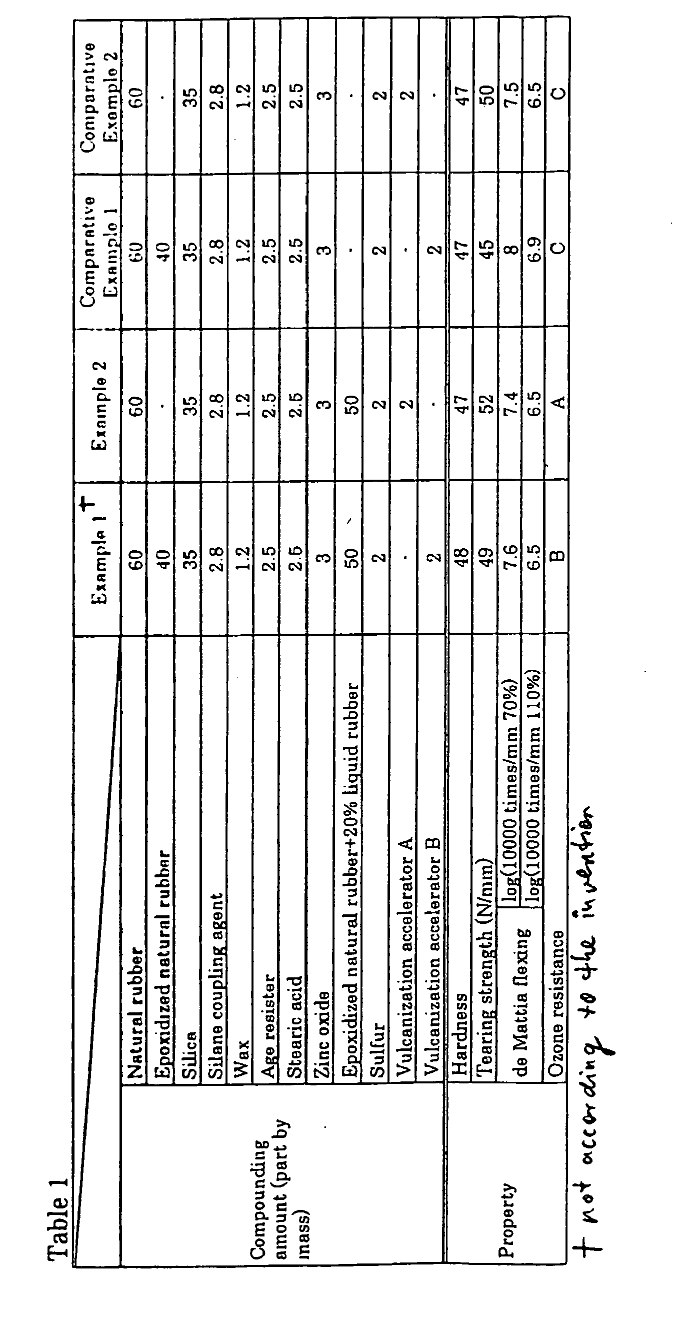

Details of various compounding components used in Examples and Comparative Examples are as follows.
(1) Natural rubber (NR): TSR20
(2) Epoxidized natural rubber (ENR): ENR25 (manufactured by Kumpulan Guthrie Berhad) (epoxidization rate: 25%)
(3) Silica: Ultrasil VN3 (manufactured by Evonik Degussa Japan Co., Ltd.) (BET specific surface area: 175m²/g)
(4) Silane coupling agent: Si69 (manufactured by Evonik Degussa Japan Co., Ltd.)
(5) Wax: paraffin wax (manufactured by OUCHI SHINKO CHEMICAL INDUSTRIAL CO., LTD.)
(6) Age resister: Antigen 6C (manufactured by Sumitomo Chemical Co., Ltd.)
(7) Stearic acid: stearic acid Tsubaki (manufactured by Nippon Oil & Fats Co., Ltd.)
(8) Zinc oxide: two types of zinc oxide (manufactured by MITSUI MINING & SMELTING CO., LTD.)
(9) Liquid rubber: LIR-200 (manufactured by KURARAY CO., LTD., number average molecular weight: 25000)
(10) Sulfur: powdery sulfur (manufactured by Karuizawa Sulfer Co., Ltd.)
(11) Vulcanization accelerator A: Nocceler DM-P (DM) (manufactured by OUCHI SHINKO CHEMICAL INDUSTRIAL CO., LTD.)
(12) Vulcanization accelerator B: Nocceler CZ-G (CZ) (manufactured by OUCHI SHINKO CHEMICAL INDUSTRIAL CO., LTD.)

Regarding vulcanized rubber samples obtained in Examples and Comparative Examples, the following test was performed. Table 1 also shows the test results.

### (Rubber hardness)

According to "method of testing hardness of vulcanized rubber and thermoplastic rubber" of JIS-K6253, hardness was measured with a spring-type A.

### (Tearing strength)

According to "vulcanized rubber and thermoplastic rubber-the way to obtain tearing strength" of JIS-K6252, a tearing strength (N/mm) was measured by using an angle-shaped test piece (vulcanized rubber sample) having no notch.

### (de Mattia Flexing crack growth test)

According to "method of de Mattia flexing crack growth test of vulcanized rubber and thermoplastic rubber" of JIS-K6260, and under the condition of a room temperature of 25°C, the times until 1 mm breakage was generated in a vulcanized rubber sample was measured, and the resulting times was expressed by logarithm. 70% and 110% in Table 1 indicate an elongation rate relative to a length of the original unvulcanized rubber sample.

### (Ozone resistance)

According to the provision of JIS K6259, the state of 96 hours after an ozone concentration 50±5ppm, and 40°C±2°C was visually determined, and assessed by three stages of A,B and C in an order from the better state.

Although the present invention has been described and illustrated in detail, it is clearly understood that the same is by way of illustration and example only and is not to be taken by way of limitation, the scope of the present invention being interpreted by the terms of the appended claims.

## Claims

1. A rubber composition for a side wall, comprising a solid rubber component comprising a natural rubber component consisting of 30 to 70% by mass of a natural rubber and 30 to 70% by mass of a modified natural rubber, 20 to 60 parts by mass of silica, 3 to 60 parts by mass of a liquid rubber having a molecular weight of 100,000 g/mol or less and 0.2 to 5 parts by mass of a thiazole-based vulcanization accelerator based on 100 parts by mass of said solid rubber component.

2. The rubber composition for a side wall according to claim 1, wherein the modified natural rubber is an epoxidized natural rubber.

3. The rubber composition for a side wall according to claim 1, wherein said liquid rubber is a liquid polyisoprene rubber.

4. The rubber composition for a side wall according to claim 1, wherein the composition further comprises 0.2 to 5 parts by mass of a sulfenamide-based vulcanization accelerator based on 100 parts by mass of the solid rubber component.

5. A pneumatic tire comprising the side wall rubber using the rubber composition as described in claim 1.

## Patentansprüche

1. Kautschukzusammensetzung für eine Seitenwand, welche eine feste Kautschukkomponente, die eine Naturkautschukkomponente enthält, welche aus 30 bis 70 Massen-% eines Naturkautschuks und 30 bis 70 Massen-% eines modifizierten Naturkautschuks besteht, 20 bis 60 Massenteile Silica, 3 bis 60 Massenteile eines flüssigen Kautschuks mit einem Molekulargewicht von 100.000 g/mol oder weniger sowie 0,2 bis 5 Massenteile eines Vulkanisationsbeschleunigers auf Basis von Thiazol bezogen auf 100 Massenteile der festen Kautschukkomponente enthält.

2. Kautschukzusammensetzung für eine Seitenwand nach Anspruch 1, wobei der modifizierte Naturkautschuk ein epoxidierter Naturkautschuk ist.

3. Kautschukzusammensetzung für eine Seitenwand nach Anspruch 1, wobei der flüssige Kautschuk ein flüssiger Polyisoprenkautschuk ist.

4. Kautschukzusammensetzung für eine Seitenwand nach Anspruch 1, wobei die Zusammensetzung des Weiteren 0,2 bis 5 Massenteile eines Vulkanisationsbeschleunigers auf Basis von Sulfenamid bezogen auf 100 Massenteile der festen Kautschukkomponente enthält.

5. Luftreifen, welcher einen Seitenwandkautschuk unter Verwendung der Kautschukzusammensetzung nach Anspruch 1 umfasst.

## Revendications

1. Composition de caoutchouc pour un flanc comprenant un constituant de caoutchouc solide comprenant un constituant de caoutchouc naturel constitué de 30 à 70 % en masse d'un caoutchouc naturel et de 30 à 70 % en masse d'un caoutchouc naturel modifié, de 20 à 60 parties en masse de silice, de 3 à 60 parties en masse d'un caoutchouc liquide ayant un poids moléculaire de 100 000 g/mol ou inférieur et de 0,2 à 5 parties en masse d'un accélérateur de vulcanisation à base de thiazole rapporté à 100 parties en masse dudit constituant de caoutchouc solide.

2. Composition de caoutchouc pour un flanc selon la revendication 1, dans laquelle le caoutchouc naturel modifié est un caoutchouc naturel époxydé.

3. Composition de caoutchouc pour un flanc selon la revendication 1, dans laquelle ledit caoutchouc liquide est un caoutchouc de poly-isoprène liquide.

4. Composition de caoutchouc pour un flanc selon la revendication 1, dans laquelle la composition comprend de plus de 0,2 à 5 parties en masse d'un accélérateur de vulcanisation à base de sulfénamide rapporté à 100 parties en masse du constituant de caoutchouc solide.

5. Pneumatique comprenant le caoutchouc de flanc utilisant la composition de caoutchouc comme décrite dans la revendication 1.
